# EUROPÄISCHE PATENTSCHRIFT

(11) **EP 2 012 963 B1**
(45) Veröffentlichungstag und Bekanntmachung des Hinweises auf die Patenterteilung: **08.09.2010**
(21) Anmeldenummer: 06724659.5
(22) Anmeldetag: 29.04.2006
(51) Int. Cl.: B23K 37/04, B23Q 1/66

(54) **MASCHINELLE ANORDNUNG ZUM BEWEGEN VON WERKSTÜCKEN UND/ODER VON BEARBEITUNGSRESTEN EINER WERKSTÜCKBEARBEITUNG SOWIE MASCHINELLE ANORDNUNG ZUM BEARBEITEN VON WERKSTÜCKEN**
MECHANICAL ASSEMBLY FOR MOVING WORK PIECES AND/OR RESTS OF WORK PIECE MACHINING AS WELL AS MECHANICAL ASSEMBLY FOR MACHINING WORK PIECES
ENSEMBLE MÉCANIQUE POUR DÉPLACER DES PIÈCES À USINER ET/OU DES RÉSIDUS D'USINAGE DE PIÈCES À USINER AINSI QU'UN ENSEMBLE MÉCANIQUE POUR USINER DES PIÈCES À USINER

(43) Veröffentlichungstag der Anmeldung: 14.01.2009
(73) Patentinhaber: Trumpf Laser- und Systemtechnik GmbH, 71254 Ditzingen (DE)
(72) Erfinder: WEBER, Jörg, 74182 Obersulm (DE); KURRER, Winfried, 86163 Augsburg (DE)
(74) Vertreter: Kohler Schmid Möbus
(86) Internationale Anmeldenummer: PCT/EP2006/004046
(87) Internationale Veröffentlichungsnummer: WO 2007/124774

(56) Entgegenhaltungen:
- EP-A- 0 781 626
- EP-A- 1 046 459
- US-A- 3 475 579
- US-B1- 6 367 677

## Beschreibung

Die Erfindung betrifft eine maschinelle Anordnung nach dem Oberbegriff des Anspruchs 1, zum Bewegen von Werkstücken und/oder von Bearbeitungsresten einer Werkstückbearbeitung,
- mit einem Ladegutträger, der mit einem Werkstück und/oder mit einem Bearbeitungsrest beladbar ist sowie
- mit einem Ladegutträgerantrieb, mittels dessen der Ladegutträger in eine Zielposition bewegbar ist und der einen Antriebsmotor sowie ein damit antriebsverbundenes Ketten-Antriebsrad umfasst, das seinerseits, von dem Antriebsmotor angetrieben, eine Antriebskette beaufschlagt, mittels derer eine Antriebsbewegung des Ketten-Antriebsrades in eine Bewegung des Ladegutträgers in die Zielposition umsetzbar ist. Eine derartige Anordnung ist im US 3 475 579 A beschrieben.

Die Erfindung betrifft des Weiteren eine maschinelle Anordnung zum Bearbeiten von Werkstücken, die eine Bearbeitungseinheit sowie eine maschinelle Anordnung der vorstehenden Art aufweist.

Von der Firma TRUMPF, 71254 Ditzingen, Deutschland wird unter der Bezeichnung TLC® 1005 eine maschinelle Anlage zum Schneiden, Schweißen und Oberflächenbehandeln metallischer Werkstücke mittels Laser angeboten. Diese Anlage ist mit einem automatischen Palettenwechselsystem erhältlich. Paletten des Palettenwechselsystems mit darauf abgelegten Werkstücken werden vor der Werkstückbearbeitung dem Arbeitsbereich der Anlage zugeführt. Nach Abschluss der Bearbeitung werden die Paletten mit den dann bearbeiteten Werkstücken aus dem Arbeitsbereich der Anlage herausbewegt. Jede Palette verfügt über eine eigene Antriebseinheit. Als Antriebsmittel dienen endlos umlaufende Zahnriemen, die überflur angeordnet sind. Bei Einsatz mehrerer Paletten zum Bedienen des Arbeitsbereiches der Anlage können die einzelnen Paletten in ein und derselben Achsrichtung oder in senkrecht zueinander verlaufenden Achsrichtungen verfahrbar sein.

Gattungsgemäße Anordnungen sind bekannt aus EP 0 781 626 A1. Im Falle des Standes der Technik werden an einer Bearbeitungseinheit zur Bearbeitung metallischer Werkstücke zwei Werkstücktische wechselweise in eine Be- und Entladeposition einerseits sowie in eine Bearbeitungsposition andererseits bewegt. Zu diesem Zweck sind die Werkstücktische an zwei Endlos-Antriebsketten angebunden, die jeweils mit einem Obertrum sowie mit einem Untertrum umlaufen. Zum Antrieb der Endlos-Antriebsketten dienen stationäre Ketten-Antriebsräder, die auf der Antriebswelle eines gleichfalls stationären Antriebsmotors aufsitzen.

Der beschriebene Werkstücktischantrieb ist verhältnismäßig voluminös und bildet eine Störkontur, die fortwährend vorhanden ist und die einen funktionsgemäßen Einsatz der vorbekannten Anordnung behindern kann.

Insoweit Abhilfe zu schaffen, ist Aufgabe der vorliegenden Erfindung.

Erfindungsgemäß gelöst wird diese Aufgabe durch die maschinelle Anordnung nach Patentanspruch 1 sowie durch die maschinelle Anordnung nach Patentanspruch 9.

Im Falle der Erfindung ist demnach als Antriebskette des Ladegutträgerantriebes eine Schubkette vorgesehen. Schubketten an sich sind bekannt. Im Gegensatz zu herkömmlichen Antriebsketten sind Schubketten in der Lage, nicht nur Zugkräfte sondern auch Schubkräfte zu übertragen. Durch eine besondere konstruktive Gestaltung der einander benachbarten Kettenglieder von Schubketten wird verhindert, dass diese unter Schubbeanspruchung ausknicken. Im Einzelnen bewirkt wird die Versteifung von Schubketten durch Vorsprünge, die an einem jeden Kettenglied zu dem benachbarten Kettenglied hin vorstehen und welche sich bei wirksamer Schubkraft an einer Schulter des benachbarten Kettengliedes abstützen und dadurch einer Auslenkung nach einer Seite hin entgegenwirken. In Gegenrichtung sind die einander benachbarten Kettenglieder von Schubketten relativ zueinander schwenkbeweglich.

Für den erfindungsgemäßen Anwendungsfall ist eine Schubkette insofern besonders vorteilhaft, als sie einlagig als Fördermittel eingesetzt werden kann. Eines Ober- sowie eines Untertrums wie im Falle herkömmlicher Antriebsketten bedarf es somit nicht. Eine Schubkette ist folglich weitaus weniger voluminös als eine endlos umlaufende Antriebskette konventioneller Bauart. Entsprechend klein ist die von einer Schubkette gebildete Störkontur.

Im Sinne einer Minimierung der von dem Ladegutträgerantrieb ausgebildeten Störkontur wirkt sich im Falle der Anordnungen nach den Patentansprüchen 1 und 9 außerdem der Umstand aus, dass das Ketten-Antriebsrad des Ladegutträgerantriebes an dem Ladegutträger gelagert ist und sich mithin bei der Bewegung des Ladegutträgers in die Zielposition gemeinschaftlich mit diesem bewegt. Mit dem Ladegutträger bewegt sich dementsprechend auch die durch das Ketten-Antriebsrad des Ladegutträgerantriebes bedingte Störkontur. Folglich wird der von dem Ladegutträger freie Bereich von dieser Störkontur freigehalten.

Besondere Ausführungsarten der maschinellen Anordnung nach Patentanspruch 1 sowie der maschinellen Anordnung nach Patentanspruch 9 ergeben sich aus den abhängigen Patentansprüchen 1 bis 8 und 10.

Auch die in den Patentansprüchen 2 und 3 beschriebenen Maßnahmen dienen zur Minimierung der Störkontur in dem von dem Ladegutträger freien Bereich. Ausweislich Patentanspruch 2 wird zu diesem Zweck das anspruchsgemäße Kettenmagazin mit dem Ladegutträger mitgeführt. Gemäß Patentanspruch 3 wird der Antriebsmotor des Ladegutträgerantriebes mit dem Ladegutträger mitbewegt.

Der Einfachheit halber wird die gemeinschaftliche Bewegung des Ladegutträgers einerseits und des Kettenmagazins und/oder des Antriebsmotors des Ladegutträgerantriebes andererseits dadurch bewerkstelligt, dass das Kettenmagazin und/oder der Antriebsmotor an dem Ladegutträger vorgesehen ist bzw. sind (Patentanspruch 4).

Bei der Bewegung des Ladegutträgers und bei der gemeinschaftlich damit ausgeführten Bewegung des Ketten-Antriebsrades des Ladegutträgerantriebes verkürzt oder verlängert sich die Schublänge der Schubkette, d. h. der Abschnitt der Schubkette zwischen dem Kettenwiderlager des Ladegutträgerantriebes und der Beaufschlagung durch das Ketten-Antriebsrad. Bei der Verkürzung der Schublänge ist der betreffende Teil der Schubkette von einer Kettenablage aufzunehmen, bei der Verlängerung der Schublänge auf der Kettenablage abzulegen. Damit sowohl beim Aufnehmen als auch beim Ablegen der Schubkette definierte Verhältnisse herrschen, insbesondere um zu gewährleisten, dass die aufgenommene Schubkette definiert in ein Antriebsgehäuse des Ketten-Antriebsrades einläuft und dass die abzulegende Schubkette definiert aus dem genannten Antriebsgehäuse austritt, ist in bevorzugter Ausgestaltung der Erfindung vorgesehen, dass das Antriebsgehäuse zu der Kettenablage hin über eine zu der Kettenablage geneigte Ein- und Auslaufrührung für die Schubkette mündet (Patentanspruch 5). Definierte Verhältnisse an dem Kettenein- und -auslauf sind vor allem im Interesse einer Minimierung des Verschleißes an der Schubkette und an den mit dieser zusammenwirkenden Bauteilen sowie im Interesse einer Minimierung der Geräuschentwicklung von Bedeutung.

Aus entsprechenden Gründen sind in Weiterbildung der Erfindung die kennzeichnenden Merkmale der Patentansprüche 6 und 7 vorgesehen. Im Falle der Erfindungsbauart nach Patentanspruch 6 steht für die Schublänge der Schubkette eine an einem separaten Ablageelement vorgesehene ebene Auflagefläche zu Verfügung. Bevorzugtermaßen ist das Ablageelement versenkt angeordnet. Es kann überdies aus einem geräusch- und/oder verschleißmindernden Werkstoff gefertigt oder mit einem entsprechenden Belag versehen sein. Mittels des Ablagevorsprungs gemäß Patentanspruch 7 lässt sich ein seitliches Ausknicken der Schubkette wirksam verhindern.

Maßnahmen zur Minimierung von Verschleiß und/oder Geräuschentwicklung, die an der Schubkette selbst getroffen sind, können Patentanspruch 8 entnommen werden. Sowohl für den Antrieb der Schubkette als auch für deren Führung in dem Kettenmagazin für die Kettenvorratslänge und/oder in dem Antriebsgehäuse des Ketten-Antriebsrades steht demnach eine breite Basis zur Verfügung. Dadurch verhindert wird insbesondere eine Verdrillung der Schubkette.

Patentanspruch 10 betrifft eine Erfindungsbauart, im Falle derer als eine Zielposition des Ladegutträgers eine Bearbeitungsposition an der Bearbeitungseinheit vorgesehen ist und im Falle derer sich das Kettenwiderlager des Ladegutträgerantriebes nahe der Bearbeitungsposition des Ladegutträgers befindet. Infolge der gewählten Anordnung des Kettenwiderlagers ist die Schublänge der Schubkette zwischen dem Kettenwiderlager und dem Ketten-Antriebsrad bei in der Bearbeitungsposition befindlichem Ladegutträger ausgesprochen klein. Die Schublänge der Schubkette wird demnach von einer lediglich geringen Anzahl von Schubkettengliedern gebildet. Daher kann sich ein etwaiges Spiel zwischen einzelnen Schubkettengliedern allenfalls zu einem geringen Gesamtspiel summieren. Daraus wiederum resultiert eine hohe Positionsgenauigkeit des Ladegutträgers in der Bearbeitungsposition. Damit verbunden ist eine hohe Positionsgenauigkeit des Ladegutes des Ladegutträgers, insbesondere von Werkstücken, die auf dem Ladegutträger abgelegt sind. Gerade in der Bearbeitungsposition des Ladegutträgers ist eine derart hohe Positionsgenauigkeit von besonderer Bedeutung. Sie stellt eine unerlässliche Voraussetzung für ein optimales Ergebnis der mit der Bearbeitungseinheit durchgeführten Werkstückbearbeitung dar.

Nachstehend wird die Erfindung anhand schematischer Darstellungen zu einem Ausführungsbeispiel näher erläutert. Es zeigen:
- Figur 1:: eine perspektivische Darstellung von zwei Wechseltischen zum Beschi- cken einer Laserbearbeitungseinheit mit zu bearbeitenden Blechen,

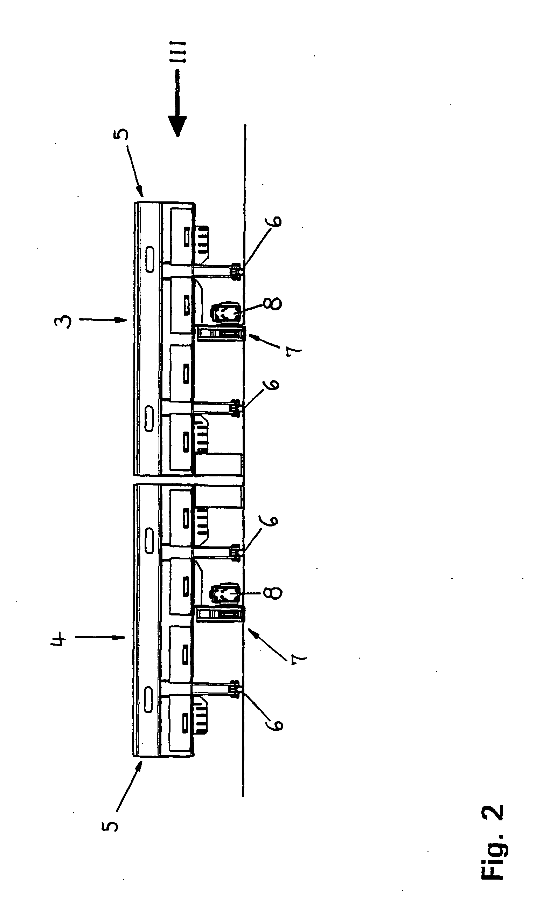

- Figur 2:: die Wechseltische gemäß Figur 1 in der Draufsicht in Richtung des Pfeils II in Figur 1,
- Figur 3:: einen der Wechseltische gemäß den Figuren 1 und 2 in zwei unterschiedlichen Positionen und dabei in einer teilgeschnittenen Ansicht in Richtung des Pfeils III in Figur 2,
- Figuren 4, 5 und 6:: Darstellungen zu Schubketten der Wechseltische gemäß den Figuren 1 bis 3,
- Figur 7:: eine Teildarstellung eines Kettenmagazins, eines Antriebsgehäuses mit Ketten-Antriebsrad und einer Schubkette der Wechseltische gemäß den Figuren 1 bis 3,
- Figur 8:: die Anordnung gemäß Figur 7 in der Draufsicht in Richtung des Pfeils VIII in Figur 7 bei seitlich beidseits geschlossenem Antriebsgehäuse und Kettenmagazin und
- Figur 9:: eine Anlage mit drei Wechseltischpaaren in der Draufsicht.

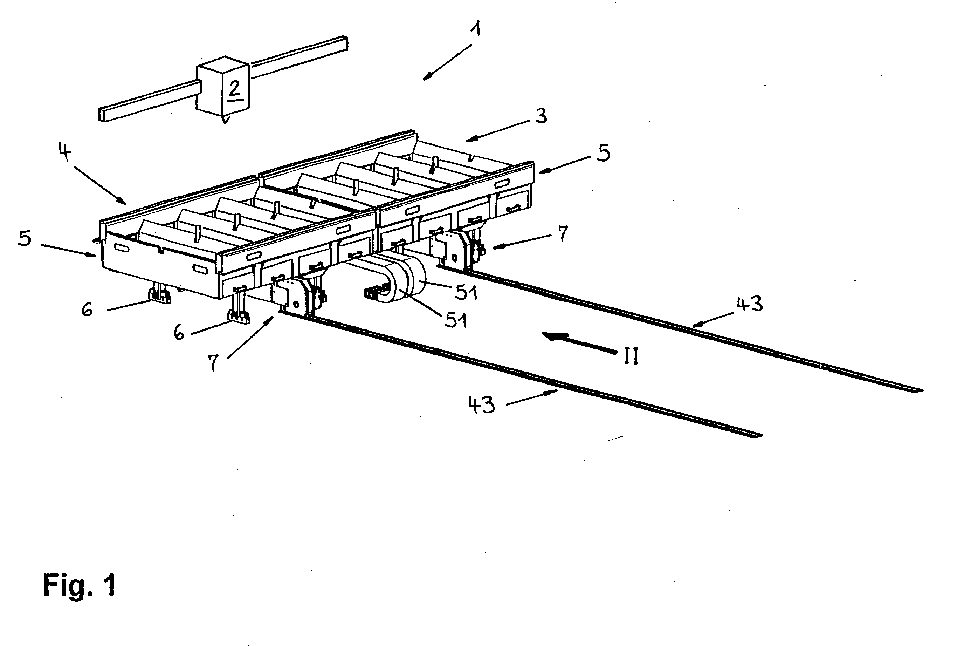

Gemäß Figur 1 umfasst eine maschinelle Anordnung 1 zum Bearbeiten von Werkstücken, im Einzelnen zum Schneiden, Schweißen und Oberflächenbehandeln von Blechen und Blechteilen, beispielsweise von Karosserieteilen, eine stark schematisiert dargestellte Bearbeitungseinheit 2 sowie Wechseltische 3, 4. Bei der Bearbeitungseinheit 2 handelt es sich um eine herkömmliche Lasereinheit. Die Wechseltische 3, 4 bilden maschinelle Anordnungen zum Bewegen der zu bearbeitenden Werkstücke und gegebenenfalls zum Bewegen von Bearbeitungsresten.

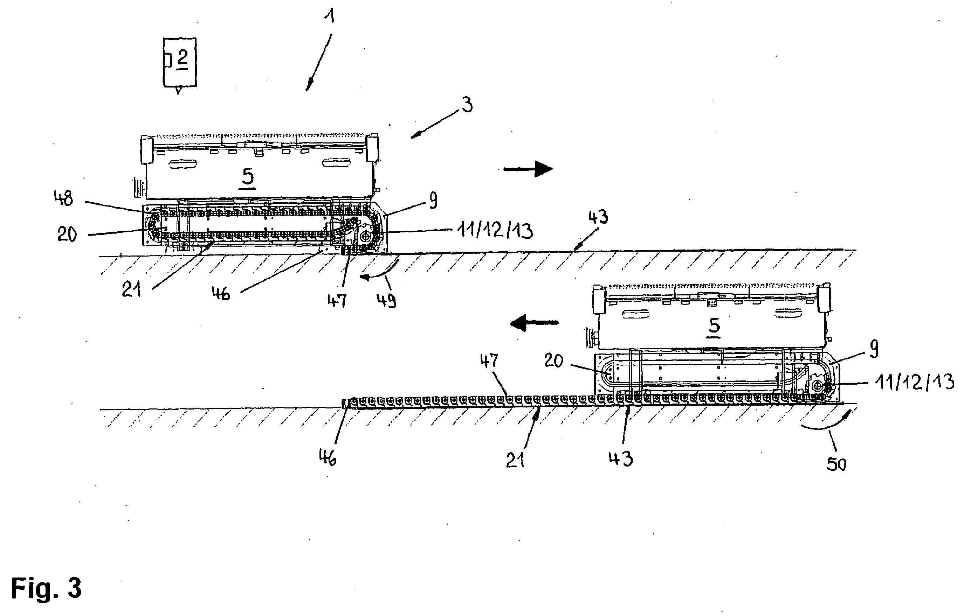

Jeder der Wechseltische 3, 4 weist einen Ladegutträger 5 auf. Dieser ist mit in Figur 1 der Einfachheit halber nicht gezeigten Auflageleisten für die zu bearbeitenden Werkstücke versehen. Unter Umständen lagern die Auflageleisten auch nach der Werkstückbearbeitung verbleibende Bearbeitungsreste, beispielsweise Restgitter. Die Auflageleisten sind herkömmlicher Bauart und lagern dementsprechend die Werkstücke und die Bearbeitungsreste auf Leistenspitzen (vgl. Figur 3).

Auf dem Untergrund der modular aufgebauten Gesamtanordnung sind die Ladegutträger 5 mittels jeweils vier Laufwagen 6 verfahrbar. Als Verfahrantrieb ist für jeden Ladegutträger 5 ein Ladegutträgerantrieb 7 vorgesehen.

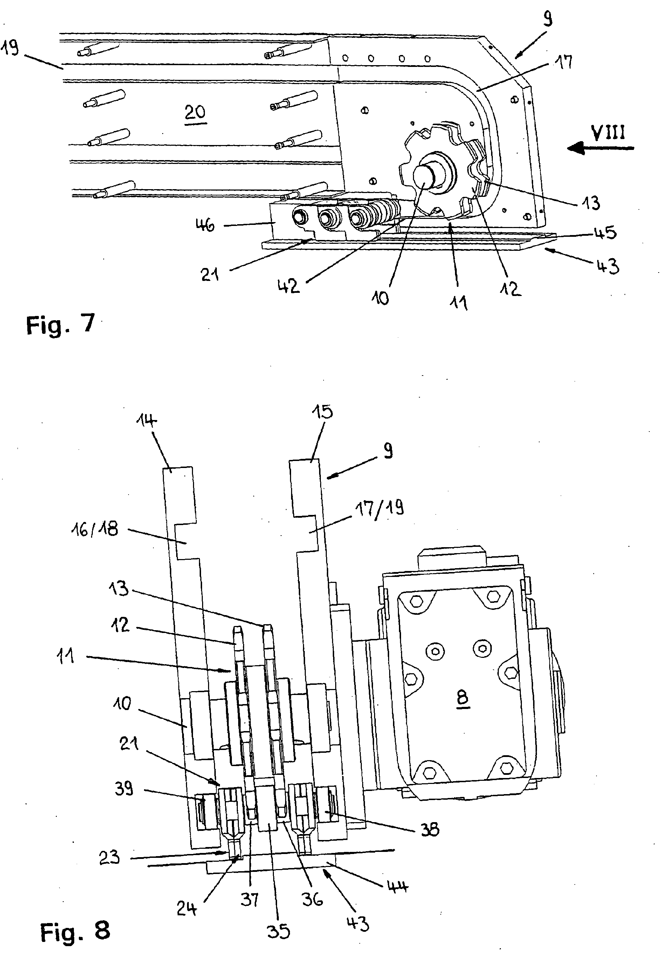

Jeder der Ladegutträgerantriebe 7 umfasst einen elektrischen Antriebsmotor 8, der seitlich an ein mit dem Ladegutträger 5 verbundenes Antriebsgehäuse 9 angeflanscht ist. Eine über ein Getriebe mit dem Antriebsmotor 8 verbundene Antriebswelle 10 durchsetzt das Antriebsgehäuse 9. Im Innern des Antriebsgehäuses 9 sitzt auf der Antriebswelle 10 ein Ketten-Antriebsrad 11 auf, welches zwei in axialer Richtung der Antriebswelle 10 voneinander beabstandete Kettensterne 12, 13 umfasst (Figuren 7, 8). An einander gegenüberliegenden Seitenwänden 14, 15 des Antriebsgehäuses 9 sind Kettenführungen 16, 17 vorgesehen. Die Laufflächen der Kettenführungen 16,17 sind aus gehärtetem Stahl gefertigt.

In Verlängerung der Kettenführungen 16, 17 an dem Antriebsgehäuse 9 verlaufen Kettenführungen 18, 19 eines Kettenmagazins 20. Die Kettenführungen 18, 19 des Kettenmagazins 20 bestehen aus einem teflonartigen Kunststoff.

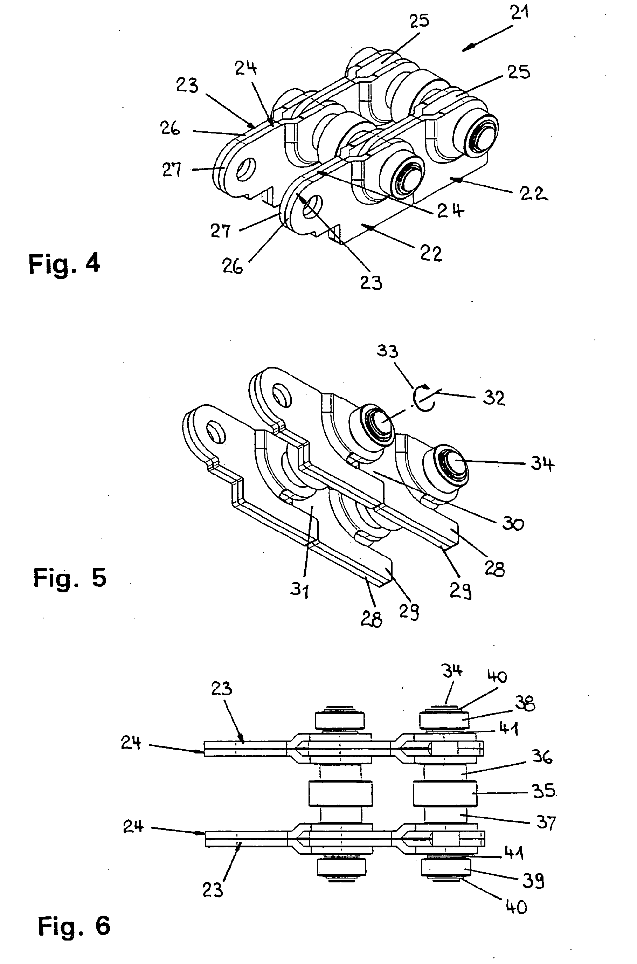

Mittels der Kettenführungen 16, 17 des Antriebsgehäuses 9 sowie mittels der Kettenführungen 18, 19 des Kettenmagazins 20 geführt wird eine Schubkette 21. Diese besteht aus einer Aneinanderreihung von Kettengliedern 22. Jeweils zwei einander unmittelbar benachbarte Kettenglieder 22 sind im Detail in den Figuren 4 bis 6 dargestellt.

Demnach umfasst jedes der Kettenglieder 22 zwei Paare von in Kettenlängsrichtung verlaufenden Kettenlaschen 23, 24. An einem ihrer Längsenden sind die Kettenlaschen 23, 24 eines jeden Laschenpaares gegensinnig abgekröpft. Dadurch entsteht jeweils eine Tasche 25, in welcher aneinander anliegende Längsenden 26, 27 der benachbarten Kettenlaschen 23, 24 aufgenommen sind. An dem mit den gegensinnigen Abkröpfungen versehenen Längsende weisen die Kettenlaschen 23, 24 außerdem auslegerartige Vorsprünge 28, 29 auf. Mit den auslegerartigen Vorsprüngen 28, 29 stützen sich die Kettenlaschen 23, 24 eines Kettengliedes 22 an Schultern 30, 31 der Kettenlaschen 23, 24 des benachbarten Kettengliedes 22 ab. Infolge dieser Abstützung sind einander benachbarte Kettenglieder 22 lediglich in einer Richtung um eine Schwenkachse 32 relativ zueinander schwenkbeweglich. Diese Schwenkrichtung ist in Figur 5 durch einen Pfeil 33 veranschaulicht.

Die Schwenkachse 32 wird von Kettenbolzen 34 ausgebildet, die sich in Querrichtung der Schubkette 21 erstrecken. Die Kettenbolzen 34 durchsetzen die einander mit Abstand gegenüberliegenden Paare von Kettenlaschen 23, 24 im Bereich der Taschen 25 und stellen dabei eine Verbindung zwischen einander benachbarten Kettengliedern 22 her.

Die in Längsrichtung der Schubkette 21 hintereinander liegenden Laschenpaare der einzelnen Kettenglieder 22 bilden jeweils eine in Kettenlängsrichtung verlaufende zweilagige Laschenreihe. Die beiden zweilagigen Laschenreihen der Schubkette 21 sind aus identischen Laschenpaaren zusammengesetzt. Jedes Laschenpaar umfasst eine Kettenlasche 23 mit einer Abkröpfung nach der einen und eine Kettenlasche 24 mit einer Abkröpfung nach der anderen Seite. Sind die Kettenlaschen 23, 24 je nach Richtung der Abkröpfung mit unterschiedlichen Fertigungstoleranzen behaftet, so summieren sich die Einzeltoleranzen in beiden zweilagigen Laschenreihen zu ein und derselben Gesamttoleranz. Dadurch werden eine Schrägstellung der in Lageraugen der Kettenlaschen 23, 24 aufgenommenen Kettenbolzen 34 sowie damit verbundene Nachteile für die Führung der Schubkette 21 vermieden.

Auf den Kettenbolzen 34 sitzt zwischen den voneinander beabstandeten Laschenpaaren eine mittlere Führungsrolle 35 auf. Der mittleren Führungsrolle 35 beidseits benachbart sind Druckrollen 36, 37. An der Außenseite der außen liegenden Kettenlaschen 23 der Laschenpaare lagert jeder Kettenbolzen 34 auf seinen Längsenden äußere Führungsrollen 38, 39. Sicherungsringe 40, 41 beidseits der äußeren Führungsrollen 38, 39 sorgen für eine verschleißarme Lagerung der äußeren Führungsrollen 38, 39 und verhindern, dass die Führungsrollen 38, 39 verklemmen.

Sowohl die mittlere Führungsrolle 35 als auch die Druckrollen 36, 37 sitzen unmittelbar auf den Kettenbolzen 34 auf. Die äußeren Führungsrollen 38, 39 sind auf dem jeweiligen Kettenbolzen 34 gleitgelagert. Sämtliche Drehverbindungen an der Schubkette 21 werden allenfalls trocken geschmiert. Auf Schmiermittel, welche in der Umgebung der Schubkette 21 vorhandene Verschmutzungen, insbesondere Staub, binden könnten, wird verzichtet.

Die Führung der Schubkette 21 im Bereich des Ketten-Antriebsrades 11 lässt sich insbesondere anhand der Figuren 7 und 8 nachvollziehen.

Die Einleitung der Antriebskraft erfolgt mittels der Kettensterne 12, 13 des Ketten-Antriebsrades 11 über die Druckrollen 36, 37 in die Kettenbolzen 34 der Schubkette 21. Nachdem die Antriebskraft an zwei in axialer Richtung der Kettenbolzen 34 voneinander beabstandeten Stellen eingeleitet wird, steht für die Krafteinleitung eine breite Basis zur Verfügung.

In den Kettenführungen 16, 17 des Antriebsgehäuses 9 sowie in den Kettenführungen 18, 19 des Kettenmagazins 20 ist die Schubkette 21 mittels der äußeren Führungsrollen 38, 39 der Kettenglieder 22 gerührt. Auch diese Führung verfügt über eine breite Basis.

Geführt wird die Schubkette 21 schließlich auch über die mittlere Führungsrolle 35 der Kettenglieder 22, die an dem Ketten-Antriebsrad 11 zwischen den Kettensternen 12, 13 zu liegen kommt.

Alles in allem ist ein verdrillungs- und ausknickungsfreier Lauf der Schubkette 21 im Innern des Antriebsgehäuses 9 sowie im Innern des Kettenmagazins 20 gewährleistet. Damit einher geht eine Minimierung der Geräuschentwicklung sowie des Verschleißes bei Betrieb des Ladegutträgerantriebes 7.

Zu der Umgebung der Wechseltische 3, 4 hin mündet das Antriebsgehäuse 9 über eine Ein- und Auslaufführung 42. Diese ist zu einer Kettenablage 43 hin geneigt. Die Kettenablage 43 ist in die Aufstellfläche der maschinellen Anordnung 1 bzw. des jeweiligen Wechseltisches 3, 4 versenkt. Sie wird von einem Ablageelement in Form einer Stahlplatte 44 gebildet, die sich in Bewegungsrichtung des zugeordneten Wechseltisches 3, 4 erstreckt. Ihr mittlerer Teil ist unter Ausbildung eines Ablagevorsprungs 45 erhaben. Der Ablagevorsprung 45 steht drei bis vier Millimeter über die Aufstellfläche der maschinellen Anordnung 1 bzw. der Wechseltische 3, 4 vor. Mit dem Ablagevorsprung 45 greift die Kettenablage 43 zwischen die in Kettenquerrichtung voneinander beabstandeten Laschenpaare der auf der Kettenablage 43 abgelegten Schubkette 21 ein. Im Zusammenspiel mit den genannten Laschenpaaren bewirkt der Ablagevorsprung 45 der Kettenablage 43 eine seitliche Führung für die Schubkette 21 und verhindert auf diese Art und Weise deren seitliches Ausknicken. Zur Minimierung der Geräuschentwicklung beim Ablegen und Aufnehmen der Schubkette 21 kann die Kettenablage 43 mit einem geräuschmindernden Belag, beispielsweise mit einer Kunststoffbeschichtung, versehen sein.

An dem in Figur 7 sichtbaren Längsende der Kettenablage 43 ist der Untergrund der Wechseltische 3, 4 über die Kettenablage 43 mit einem Kettenwiderlager 46 versehen. An dem Kettenwiderlager 46 ist die Schubkette 21 mit einem Ende befestigt und abgestützt.

Der Betrieb der Wechseltische 3, 4 ist in Figur 3 veranschaulicht.

Gezeigt wird der Wechseltisch 3 mit zwei Zielpositionen des Ladegutträgers 5, nämlich mit der Bearbeitungsposition des Ladegutträgers 5 (Figur 3 oben) sowie mit der Be- und Entladeposition des Ladegutträgers 5 (Figur 3 unten).

Das Kettenwiderlager 46 ist derart angeordnet, dass bei in der Bearbeitungsposition befindlichem Ladegutträger 5 die Länge der Schubkette 21 zwischen dem von dem Ladegutträger 5 überfahrenen Kettenwiderlager 46 und dem Ketten-Antriebsrad 11, d. h. eine Schublänge 47 der Schubkette 21, minimiert ist. Gleichzeitig ist die Länge der Schubkette 21 jenseits des Ketten-Antriebsrades 11, also eine Kettenvorratslänge 48 der Schubkette 21, maximal. Mit der Minimierung der Schublänge 47 der Schubkette 21 verbunden ist eine Minimierung der Anzahl der Kettenglieder 22, aus denen die Schublänge 47 der Schubkette 21 zusammengesetzt ist. Daraus wiederum resultiert eine Minimierung des sich zu einem Gesamtspiel summierenden Spiels zwischen den einzelnen Kettengliedern 22 der Schublänge 47. Infolgedessen lässt sich der Ladegutträger 5 und mit diesem auch das darauf abgelegte, der Einfachheit halber nicht gezeigte Werkstück mit optimaler Genauigkeit positionieren. Eine optimale Positioniergenauigkeit des zu bearbeitenden Werkstückes ist Voraussetzung für ein optimales Ergebnis der mit der Bearbeitungseinheit 2 durchgeführten Werkstückbearbeitung.

Befindet sich der Ladegutträger 5 in der Bearbeitungsposition, so ist die Schubkette 21 nahezu vollständig in dem Kettenmagazin 20 aufgenommen. Der Bereich vor der Maschine ist daher frei von jeglicher Störkontur. Über die Aufstellfläche des Wechseltisches 3 steht allenfalls der Ablagevorsprung 45 der Kettenablage 43 vor. Nachdem dieser Überstand aber lediglich wenige Millimeter beträgt, wird die Nutzbarkeit des Bereiches vor der Maschine und damit insbesondere die Zugänglichkeit des Ladegutträgers 5 allenfalls unerheblich beeinträchtigt.

Nach Beendigung der Werkstückbearbeitung wird der Ladegutträger 5 aus der Bearbeitungsposition in die Be- und Entladeposition bewegt. Zu diesem Zweck treibt der Antriebsmotor 8 das Ketten-Antriebsrad 11 in einer Drehrichtung 49 an. Das Ketten-Antriebsrad 11 beaufschlagt seinerseits die an dem Kettenwiderlager 46 abgestützte Schubkette 21 und bewegt sich infolgedessen gemeinschaftlich mit dem Ladegutträger 5 in Richtung auf die Entladeposition.

Im Laufe der translatorischen Bewegung des Ladegutträgers 5 verlässt die Schubkette 21 das Kettenmagazin 20 über das Antriebsgehäuse 9 und wird außerhalb des Antriebsgehäuses 9 auf der Kettenablage 43 abgelegt. Bei ihrer Bewegung durch das Kettenmagazin 20 und das Antriebsgehäuse 9 wird die Schubkette 21 in der vorstehend beschriebenen Weise geführt. Die über das Ketten-Antriebsrad 11 in die Schubkette 21 eingeleitete Antriebskraft bewirkt infolge der Führung der Schubkette 21 in dem Antriebsgehäuse 9 eine Schubbeanspruchung der Schublänge 47 der Schubkette 21 parallel zu dem Untergrund des jeweiligen Wechseltisches 3,4.

Auf die Kettenablage 43 gelangt die Schubkette 21 über die Ein- und Auslaufführung 42 des Antriebsgehäuses 9. Bei der Ablage auf der Kettenablage 43 kommt deren Ablagevorsprung 45 zwischen den in Kettenquerrichtung voneinander beabstandeten Laschenreihen der Schubkette 21 zu liegen.

Insgesamt ergeben sich an der Schubkette 21 bei der Bewegung des Ladegutträgers 5 in die Be- und Entladeposition sowohl innerhalb als auch außerhalb des Kettenmagazins 20 und des Antriebsgehäuses 9 definierte Verhältnisse.

Hat der Ladegutträger 5 die Be- und Entladeposition erreicht, so wird das auf dem Ladegutträger 5 abgelegte Werkstück oder ein dort verbliebener Bearbeitungsrest, etwa ein Restgitter der vorausgegangenen Werkstückbearbeitung manuell oder automatisiert entladen. Anschließend wird ein weiteres zu bearbeitendes Werkstück auf dem Ladegutträger 5 abgelegt.

Bei in der Be- und Entladeposition befindlichem Ladegutträger 5 beschränkt sich die Störkontur hinter dem Ladegutträger 5 im Wesentlichen auf die dort abgelegte Schublänge 47 der Schubkette 21. Die sich damit ergebende Störkontur ist auf Grund des geringen Volumens der Schubkette 21 klein und bewirkt folglich keine nennenswerte Beeinträchtigung für die Nutzung des Bereichs hinter dem Ladegutträger 5. Wie üblich befinden sich in diesem Bereich außer der Schubkette 21 noch Versorgungsleitungen für den Ladegutträger 5, die bei dessen Bewegung mitgeführt werden. In Figur 1 sind Schleppketten 51 angedeutet, in deren Innern die genannten Versorgungsleitungen in herkömmlicher Weise untergebracht sind.

Das auf dem in die Be- und Entladeposition verfahrenen Ladegutträger 5 abgelegte neue Werkstück ist in seine Bearbeitungsposition zu bewegen. Zu diesem Zweck treibt der Antriebsmotor 8 das Ketten-Antriebsrad 11 in einer Drehrichtung 50 an. Das in die Schubkette 21 eingreifende Ketten-Antriebsrad 11 zieht infolgedessen den Ladegutträger 5 in Richtung auf die Bearbeitungsposition. Dabei wird die Schubkette 21 von der Kettenablage 43 aufgenommen und durch das Antriebsgehäuse 9 in das Kettenmagazin 20 eingeschoben. Mit dem Verfahren des Ladegutträgers 5 in die Bearbeitungsposition verkürzt sich die Schublänge 47 der Schubkette 21. Die Schubkette 21 läuft dabei über die geneigte Ein- und Auslaufführung 42 des Antriebsgehäuses 9. Auf Grund ihrer definierten Führung bewegt sich die Schubkette 21 gleichförmig in das Antriebsgehäuse 9 und schließlich in das Kettenmagazin 20.

Die Verfahrweglänge des Ladegutträgers 5 lässt sich auf einfache Art und Weise durch Steuerung des Ladegutträgerantriebes 7 variieren. Es ist lediglich die maximale Schublänge 47 bzw. die maximale Kettenvorratslänge 48 der Schubkette 21 den jeweiligen Erfordernissen entsprechend zu definieren. Unabhängig von der eingestellten Verfahrweglänge ist der Bereich vor dem Ladegutträger 5 frei von jeglicher Störkontur, der Bereich hinter dem Ladegutträger 5 annähernd störkonturfrei.

Infolge der exakten Führung der Schubkette 21 lässt sich sowohl die Verfahrbewegung des Ladegutträgers 5 von der Bearbeitungs- in die Be- und Entladeposition als auch die Verfahrbewegung des Ladegutträgers 5 in Gegenrichtung mit verhältnismäßig hoher Geschwindigkeit ausführen. Geschwindigkeiten von über 40m/min können erreicht werden. Infolgedessen ist eine große Anzahl von Arbeitszyklen realisierbar. Möglich sind mehr als 500 Arbeitszyklen am Tag. Auf Grund der erzielten Verschleißminimierung ergeben sich für die Anlagenkomponenten lange Standzeiten.

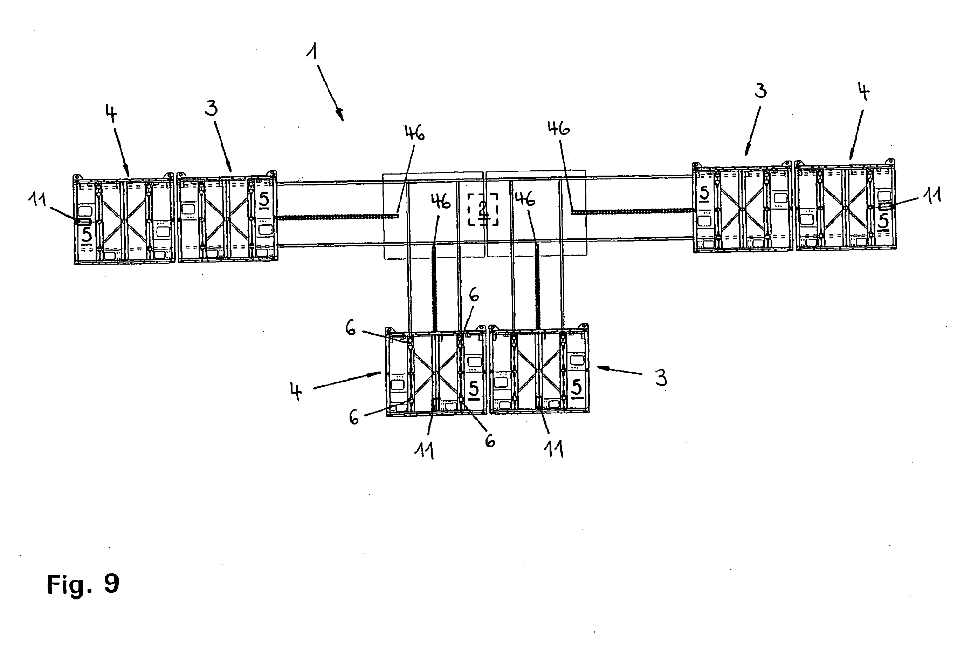

Gemäß Figur 9 wird die Bearbeitungseinheit 2 der maschinellen Anordnung 1 mit insgesamt 3 Paaren von Wechseltischen 3, 4 bedient. Die in der Abbildung außen liegenden Wechseltische 3, 4 eines jeden Wechseltischpaares sind miteinander zu einer Einheit gekoppelt. Die Wechseltische 3, 4 des mittleren Wechseltischpaares können gekoppelt oder einzeln bewegt werden. Die Bewegungsachsen der Wechseltische 3, 4 des mittleren Wechseltischpaares einerseits und die Bewegungsachsen der Wechseltische 3, 4 der außen liegenden Wechseltischpaare andererseits verlaufen senkrecht zueinander. Allen Wechseltischen 3, 4 gemeinsam ist eine Bearbeitungsposition für die Ladegutträger 5. Diese Bearbeitungsposition in der Mitte der Darstellung ist durch zwei nebeneinander angeordnete Rechtecke angedeutet.

Für den Betrieb der Wechseltische 3, 4 der drei Wechseltischpaare mit sich kreuzenden Bewegungsachsen von besonderer Bedeutung ist die Anordnung der einzelnen Kettenwiderlager 46 einerseits sowie die Anordnung der in der Abbildung verdeckt liegenden Ketten-Antriebsräder 11 an den Ladegutträgern 5 der Wechseltische 3, 4 andererseits.

Die Ketten-Antriebsräder 11 sind an dem von dem jeweiligen Kettenwiderlager 46 abliegenden Rand der Ladegutträger 5 vorgesehen. Gleichzeitig sind die Kettenwiderlager 46 derart angebracht, dass sie in der Bearbeitungsposition der Ladegutträger 5 dem jeweils zugeordneten Ketten-Antriebsrad 11 eng benachbart sind. Infolgedessen liegen bei in der Bearbeitungsposition befindlichen Ladegutträgern 5 auch die Kettenwiderlager 46 in dem mit dem jeweils zugeordneten Ketten-Antriebsrad 11 versehenen Randbereich der Ladegutträger 5. Das Innere desjenigen Bereichs, welcher von den in der Bearbeitungsposition befindlichen Ladegutträgern 5 überdeckt wird, bleibt dementsprechend von Störkonturen frei. In diesem Bereich können sich folglich die Laufwagen 6 der in sich kreuzenden Richtungen bewegten Ladegutträger 5 ungehindert bewegen.

## Patentansprüche

1. Maschinelle Anordnung zum Bewegen von Werkstücken und/oder von Bearbeitungsresten einer Werkstückbearbeitung,
• mit einem Ladegutträger (5), der mit einem Werkstück und/oder mit einem Bearbeitungsrest beladbar ist sowie
• mit einem Ladegutträgerantrieb (7), mittels dessen der Ladegutträger (5) in eine Zielposition bewegbar ist und der einen Antriebsmotor (8) sowie ein damit antriebsverbundenes Ketten-Antriebsrad (11) umfasst, das seinerseits, von dem Antriebsmotor (8) angetrieben, eine Antriebskette beaufschlagt, mittels derer eine Antriebsbewegung des Ketten-Antriebsrades (11) in eine Bewegung des Ladegutträgers (5) in die Zielposition umsetzbar ist,
**dadurch gekennzeichnet, dass** der Ladegutträgerantrieb (7) als Antriebskette eine Schubkette (21) umfasst und dass das Ketten-Antriebsrad (11) an dem Ladegutträger (5) gelagert ist und die Schubkette (21) unter Mitnahme des Ladegutträgers (5) in die Zielposition beaufschlagt, wobei die Schubkette (21) an einem Kettenwiderlager (46) abgestützt ist, relativ zu welchem sich das Ketten-Antriebsrad (11) gemeinschaftlich mit dem Ladegutträger (5) bewegt.

2. Maschinelle Anordnung nach Anspruch 1, **dadurch gekennzeichnet, dass** ein Kettenmagazin (20) vorgesehen ist zur Aufnahme einer Kettenvorratslänge (48) der Schubkette (21) an der von dem Kettenwiderlager (46) abliegenden Seite der Beaufschlagung durch das Ketten-Antriebsrad (11) und dass das Kettenmagazin (20) bei der Bewegung des Ladegutträgers (5) in die Zielposition gemeinschaftlich mit dem Ladegutträger (5) bewegbar ist.

3. Maschinelle Anordnung nach einem der vorhergehenden Ansprüche, **dadurch gekennzeichnet, dass** der Antriebsmotor (8) des Ladegutträgerantriebes (7) bei der Bewegung des Ladegutträgers (5) in die Zielposition gemeinschaftlich mit dem Ladegutträger (5) bewegbar ist.

4. Maschinelle Anordnung nach einem der vorhergehenden Ansprüche, **dadurch gekennzeichnet, dass** das Kettenmagazin (20) für die Kettenvorratslänge (48) der Schubkette (21) und/oder der Antriebsmotor (8) des Ladegutträgerantriebes (7) an dem Ladegutträger (5) vorgesehen ist bzw. sind.

5. Maschinelle Anordnung nach einem der vorhergehenden Ansprüche, **dadurch gekennzeichnet, dass** eine Kettenablage (43) vorgesehen ist, relativ zu welcher der Ladegutträger (5) bei der Bewegung in die Zielposition bewegbar ist und auf welcher eine zwischen dem Kettenwiderlager (46) und der Beaufschlagung durch das Ketten-Antriebsrad (11) vorgesehene Schublänge (47) der Schubkette (21) bei der genannten Bewegung des Ladegutträgers (5) ablegbar oder von welcher eine Schublänge (47) der Schubkette (21) bei der genannten Bewegung des Ladegutträgers (5) aufnehmbar ist und dass ein das Ketten-Antriebsrad (11) umgebendes Antriebsgehäuse (9) zu der Kettenablage (43) hin über eine zu der Kettenablage (43), geneigte Ein- und Auslaufführung (42) für die Schubkette (21) mündet.

6. Maschinelle Anordnung nach einem der vorhergehenden Ansprüche, **dadurch gekennzeichnet, dass** als Kettenablage (43) ein mit einer ebenen Auflagefläche für die Schubkette (21) versehenes Ablageelement (44) vorgesehen ist.

7. Maschinelle Anordnung nach einem der vorhergehenden Ansprüche, **dadurch gekennzeichnet, dass** an der Kettenablage (43) wenigstens ein Ablagevorsprung (45) vorgesehen ist, welcher zwischen Kettenlaschen (23, 24) der Schubkette (21) aufgenommen ist, die an der auf der Kettenablage (43) abgelegten Schublänge (47) der Schubkette (21) in Kettenlängsrichtung verlaufen und in Kettenquerrichtung voneinander beabstandet sind.

8. Maschinelle Anordnung nach einem der vorhergehenden Ansprüche, **dadurch gekennzeichnet, dass** die Schubkette (21) Kettenglieder (22) aufweist, mit in Kettenlängsrichtung verlaufenden und quer dazu voneinander beabstandeten Kettenlaschen (23, 24) sowie mit Kettenbolzen (34), die sich in Kettenquerrichtung erstrecken und in dieser Richtung voneinander beabstandete Kettenlaschen (23, 24) durchsetzen und dass die Schubkette (21) über Kettenbolzen (34) und dabei an mehreren in Längsrichtung voneinander beabstandeten Stellen der Kettenbolzen (34) von dem Ketten-Antriebsrad (11) beaufschlagbar und/oder in dem Kettenmagazin (20) für die Kettenvorratslänge (48) und/oder in dem Antriebsgehäuse (9) des Ketten-Antriebsrades (11) geführt ist.

9. Maschinelle Anordnung zum Bearbeiten von Werkstücken, mit einer Bearbeitungseinheit (2) sowie mit einer maschinellen Anordnung (3, 4) zum Bewegen von Werkstücken und/oder von Bearbeitungsresten einer Werkstückbearbeitung relativ zu der Bearbeitungseinheit (2), **dadurch gekennzeichnet, dass** die maschinelle Anordnung (3, 4) zum Bewegen von Werkstücken und/oder von Bearbeitungsresten einer Werkstückbearbeitung nach einem der Ansprüche 1 bis 8 ausgebildet ist.

10. Maschinelle Anordnung nach Anspruch 9, **dadurch gekennzeichnet, dass** als eine Zielposition des Ladegutträgers (5) eine Bearbeitungsposition des Ladegutträgers (5) an der Bearbeitungseinheit (2) vorgesehen ist und dass das Kettenwiderlager (46) nahe der Bearbeitungsposition des Ladegutträgers (5) angeordnet ist, derart, dass die Schublänge (47) der Schubkette (21) zwischen dem Kettenwiderlager (46) und der Beaufschlagung durch das Ketten-Antriebsrad (11) bei in der Bearbeitungsposition befindlichem Ladegutträger (5) möglichst klein ist.

## Claims

1. A mechanical arrangement for moving workpieces and/or processing remnants from processing of a workpiece,
• having a load carrier (5) which can be loaded with a workpiece and/or with a processing remnant and
• having a load carrier drive (7) by means of which the load carrier (5) is movable into a target position and which comprises a drive motor (8) and, drivingly connected therewith, a chain driving wheel (11) which in turn, driven by the drive motor (8), acts on a drive chain by means of which a driving movement of the chain driving wheel (11) can be converted into a movement of the load carrier (5) into the target position,
**characterised in that** the load carrier drive (7) comprises a rigid chain (21) as the drive chain, and the chain driving wheel (11) is supported on the load carrier (5) and acts on the rigid chain (21), taking the load carrier (5) with it into the target position, the rigid chain (21) being braced against a chain abutment (46) relative to which the chain driving wheel (11) moves together with the load carrier (5).

2. A mechanical arrangement according to claim 1, **characterised in that** a chain magazine (20) is provided for taking up a chain reserve length (48) of the rigid chain (21) on the side of the site of action of the chain driving wheel (11) remote from the chain abutment (46), and the chain magazine (20) is movable together with the load carrier (5) as the load carrier (5) moves into the target position.

3. A mechanical arrangement according to one of the preceding claims, **characterised in that** the drive motor (8) of the load carrier drive (7) is movable together with the load carrier (5) as the load carrier (5) moves into the target position.

4. A mechanical arrangement according to any one of the preceding claims, **characterised in that** the chain magazine (20) for the chain reserve length (48) of the rigid chain (21) and/or the drive motor (8) of the load carrier drive (7) is or are provided on the load carrier (5).

5. A mechanical arrangement according to any one of the preceding claims, **characterised in that** a chain rest (43) is provided, relative to which the load carrier (5) is movable during movement into the target position and on which a pushed length (47) of the rigid chain (21), provided between the chain abutment (46) and the site of action of the chain driving wheel (11), can be laid down during said movement of the load carrier (5) or from which a pushed length (47) of the rigid chain (21) can be taken up during said movement of the load carrier (5), and a drive housing (9) surrounding the chain driving wheel (11) opens towards the chain rest (43) via an entry and exit guide (42) for the rigid chain (21), which entry and exit guide (42) is inclined towards the chain rest (43).

6. A mechanical arrangement according to any one of the preceding claims, **characterised in that** a rest element (44) provided with a level support surface for the rigid chain (21) is provided as the chain rest (43).

7. A mechanical arrangement according to any one of the preceding claims, **characterised in that** at least one rest protrusion (45) is provided on the chain rest (43), which rest protrusion (45) is received between chain link plates (23, 24) of the rigid chain (21) which extend in the longitudinal direction of the chain over the pushed length (47) of the rigid chain (21) laid down on the chain rest (45) and which are spaced apart in the transverse direction of the chain.

8. A mechanical arrangement according to any one of the preceding claims, **characterised in that** the rigid chain (21) has chain links (22) comprising chain link plates (23, 24) extending in the longitudinal direction of the chain and spaced apart in the direction transverse thereto, and comprising link pins (34) extending in the transverse direction of the chain and passing through chain link plates (23, 24) spaced apart **in that** direction, and the rigid chain (21) can be acted upon by the chain driving wheel (11) via link pins (34) and **in that** process can be acted upon at a plurality of locations of the chain link bolts (34), which locations are spaced apart in the longitudinal direction and/or is guided in the chain magazine (20) for the chain reserve length (48) and/or in the drive housing (9) of the chain driving wheel (11).

9. A mechanical arrangement for processing workpieces, having a processing unit (2) and having a mechanical arrangement (3, 4) for moving workpieces and/or processing remnants from processing of a workpiece relative to the processing unit (2), **characterised in that** the mechanical arrangement (3, 4) for moving workpieces and/or processing remnants from processing of a workpiece is configured in accordance with any one of claims 1 to 8.

10. A mechanical arrangement according to claim 9, **characterised in that** a processing position of the load carrier (5) at the processing unit (2) is provided as a target position of the load carrier (5), and the chain abutment (46) is arranged close to the processing position of the load carrier (5) in such a manner that the pushed length (47) of the rigid chain (21) between the chain abutment (46) and the site of action of the chain driving wheel (11) when the load carrier (5) is in the processing position is as small as possible.

## Revendications

1. Agencement automatique de mise en mouvement de pièces à usiner et/ou de résidus d'usinage de pièces, comprenant
• un porte-charges (5) pouvant être chargé d'une pièce à usiner et/ou d'un résidu d'usinage,
• ainsi qu'un entraînement (7) au moyen duquel ledit porte-charges (5) peut être mis en mouvement vers un emplacement assigné, et qui comprend un moteur de commande (8), ainsi qu'une roue (11) d'entraînement de chaîne en liaison menante avec ledit moteur, laquelle roue, entraînée par ledit moteur de commande (8), sollicite à son tour une chaîne d'entraînement au moyen de laquelle un mouvement menant ladite roue (11) d'entraînement de chaîne peut être converti en un mouvement dudit porte-charges (5) vers ledit emplacement assigné,
**caractérisé par le fait que** l'entraînement (7) du porte-charges englobe une chaîne de poussée (21), en tant que chaîne d'entraînement; et **par le fait que** la roue (11) d'entraînement de chaîne est montée sur ledit porte-charges (5) et sollicite ladite chaîne de poussée (21) en entraînant ledit porte-charges (5) vers ledit emplacement assigné, ladite chaîne de poussée (21) étant en appui sur une contre-butée (46) vis-à-vis de laquelle ladite roue (11) d'entraînement de chaîne exécute un mouvement commun avec ledit porte-charges (5).

2. Agencement automatique selon la revendication 1, **caractérisé par le fait qu'**un magasin (20) de stockage de chaîne est prévu pour recevoir une longueur provisionnelle (48) de la chaîne de poussée (21) du côté sollicitation par la roue (11) d'entraînement de chaîne, tourné à l'opposé de la contre-butée (46) associée à ladite chaîne ; et **par le fait que** ledit magasin (20) de stockage de chaîne peut être animé d'un mouvement commun, avec le porte-charges (5), lors du mouvement dudit porte-charges (5) vers l'emplacement assigné.

3. Agencement automatique selon l'une des revendications précédentes, **caractérisé par le fait que** le moteur de commande (8) de l'entraînement (7) du porte-charges peut être animé d'un mouvement commun, avec ledit porte-charges (5), lors du mouvement dudit porte-charges (5) vers l'emplacement assigné.

4. Agencement automatique selon l'une des revendications précédentes, **caractérisé par le fait que** le magasin (20) affecté à la longueur provisionnelle (48) de la chaîne de poussée (21), et/ou le moteur de commande (8) de l'entraînement (7) du porte-charges, est (sont) respectivement prévu(s) sur ledit porte-charges (5).

5. Agencement automatique selon l'une des revendications précédentes, **caractérisé par** la présence d'un receveur (43) de chaîne par rapport auquel le porte-charges (5) peut être mû au cours du mouvement vers l'emplacement assigné, receveur sur lequel une longueur de poussée (47) de la chaîne de poussée (21), prévue entre la contre-butée (46) associée à ladite chaîne et le côté sollicitation par la roue (11) d'entraînement de chaîne, peut être déposée lors du mouvement précité dudit porte-charges (5), ou duquel une longueur de poussée (47) de ladite chaîne de poussée (21) peut être levéelors dudit mouvement précité dudit porte-charges (5) ; et par le fait qu'un carter d'entraînement (9), entourant ladite roue (11) d'entraînement de chaîne, débouche en direction dudit receveur (43) de chaîne par l'intermédiaire d'un guide (42) d'entrée et de sortie de ladite chaîne de poussée (21), incliné vers ledit receveur (43) de chaîne.

6. Agencement automatique selon l'une des revendications précédentes, **caractérisé par le fait qu'**un élément récepteur (44), pourvu d'une surface plane d'appui destinée à la chaîne de poussée (21), est prévu en tant que receveur (43) de chaîne.

7. Agencement automatique selon l'une des revendications précédentes, **caractérisé par** la présence, sur le receveur (43) de chaîne, d'au moins une protubérance réceptrice (45) interposée entre des plaquettes (23, 24) de la chaîne de poussée (21) qui s'étendent dans la direction longitudinale de ladite chaîne, sur la longueur de poussée (47) de ladite chaîne de poussée (21) déposée sur ledit receveur (43) de chaîne, et sont mutuellement distantes dans la direction transversale de ladite chaîne.

8. Agencement automatique selon l'une des revendications précédentes, **caractérisé par le fait que** la chaîne de poussée (21) présente des chaînons (22) comprenant des plaquettes (23, 24) qui s'étendent dans la direction longitudinale de ladite chaîne et sont distantes les unes des autres transversalement à cette direction, ainsi que des tenons (34) s'étendant dans la direction transversale de ladite chaîne et traversant des plaquettes (23, 24) distantes les unes des autres dans cette direction ; et **par le fait que**, par l'intermédiaire de tenons (34) et en plusieurs emplacements desdits tenons (34) distants les uns des autres dans la direction longitudinale, ladite chaîne de poussée (21) peut être sollicitée par la roue (11) d'entraînement de chaîne, et/ou est guidée dans le magasin (20) affecté à la longueur de chaîne provisionnelle (48), et/ou dans le carter d'entraînement (9) de ladite roue (11) d'entraînement de chaîne.

9. Agencement automatique d'usinage de pièces, comprenant une unité d'usinage (2), ainsi qu'un agencement automatique (3, 4) de mise en mouvement, vis-à-vis de ladite unité d'usinage (2), de pièces à usiner et/ou de résidus d'usinage de pièces, **caractérisé par le fait que** ledit agencement automatique (3, 4) de mise en mouvement de pièces à usiner et/ou de résidus d'usinage de pièces est réalisé conformément à l'une des revendications 1 à 8.

10. Agencement automatique selon la revendication 9, **caractérisé par le fait qu'**un emplacement d'usinage du porte-charges (5), sur l'unité d'usinage (2), est prévu en tant qu'emplacement assigné audit porte-charges (5) ; et **par le fait que** la contre-butée (46) associée à la chaîne est disposée à proximité dudit emplacement d'usinage dudit porte-charges (5), de telle sorte que la longueur de poussée (47) de la chaîne de poussée (21), entre ladite contre-butée (46) associée à la chaîne et le côté sollicitation par la roue (11) d'entraînement de chaîne, soit la plus modeste possible lorsque ledit porte-charges (5) occupe ledit emplacement d'usinage.
